# EUROPEAN PATENT APPLICATION

(11) **EP 2 620 250 A1**
(43) Date of publication of application: **31.07.2013**
(21) Application number: 11826719.4
(22) Date of filing: 05.09.2011
(51) Int. Cl.: B23K 31/00, C21D 9/08, C21D 9/50

(54) **HEAT TREATMENT METHOD FOR BRANCH PIPE WELDED PORTION**

(30) Priority: 24.09.2010 JP 2010213006
(71) Applicant: Hitachi, Ltd., Chiyoda-ku Tokyo 100-8280 (JP)
(72) Inventor: TSURUKI, Masaki, Hitachi-shi Ibaraki 319-1292 (JP); AOIKE, Satoru, Hitachi-shi Ibaraki 319-1292 (JP); ORITANI, Naohiko, Hitachi-shi Ibaraki 317-0073 (JP); FUKUDA, Yuka, Hitachi-shi Ibaraki 317-0073 (JP)
(74) Representative: MERH-IP Matias Erny Reichl Hoffmann
(86) International application number: PCT/JP2011/070195
(87) International publication number: WO 2012/039273

(57) **Abstract**

The present invention provides a heat treatment method comprising: welding a small diameter pipe (12) to a bonded joint (31) joined to a large diameter pipe (10), the small diameter pipe (12) having a diameter of 200 mm or less and a thickness of 15 mm or less, the large diameter pipe (10) having a diameter greater than that of the small diameter pipe (12); then heating the vicinity of the welded portion; and then cooling an inner surface of the pipes by use of coolant; wherein a distance between a heating area and the large diameter pipe (10) is equal to or greater than 70 mm. The heat treatment method can reduce the intention residual stress caused by welding or processing the pipes.

## Description

### Technical Field

The present invention relates to a thermal processing method for improving the residual stress of a pipe caused by welding or processing.

### Background Art

A typical method for improving the residual stress of a pipe that has been welded or processed is disclosed in patent documents 1 to 3. These patent documents 1 to 3 describe the following method. An outer surface of a pipe is heated to a predetermined temperature and thereafter coolant is passed on the inner surface of the pipe to produce a temperature difference in the thickness direction of the pipe. The inner surface of the pipe is subjected to intention yield and the outer surface thereof is subjected to compressive yield. This forms in the thickness direction of the pipe a residual stress distribution in which the pipe has compressive stress on the inner surface thereof and intention stress on the outer surface thereof after the heat treatment.

The intention residual stress caused by the thermal history of welding or processing contributes to lowering in fatigue strength and the generation and development of stress corrosion cracking. These residual stresses is released or compressed, which can suppress damage due to the fatigue or stress corrosion cracking.

To deal with the intention residual stress of a pipe caused by welding or processing, patent document 1 describes the following method. A pipe having a small thickness and a small diameter is uniformly heated on the outer surface thereof and thereafter coolant is passed on the inner surface thereof to produce a temperature difference in the thickness direction. Thus, compressive residual stress is generated on the inner surface of the pipe, whereas intention residual stress is generated on the outer surface thereof.

Patent document 2 describes the components of material as an object, temperature and time for heat treatment, hardness after the heat treatment and cleanness of a surface.

Patent document 3 describes temperature for heat treatment, a heating area, a necessary temperature difference in a thickness direction, time for the heat treatment and a construction method.

It is desired in any of the patent documents to uniformly heat an appropriate heating area in order to achieve an appropriate stress improvement.

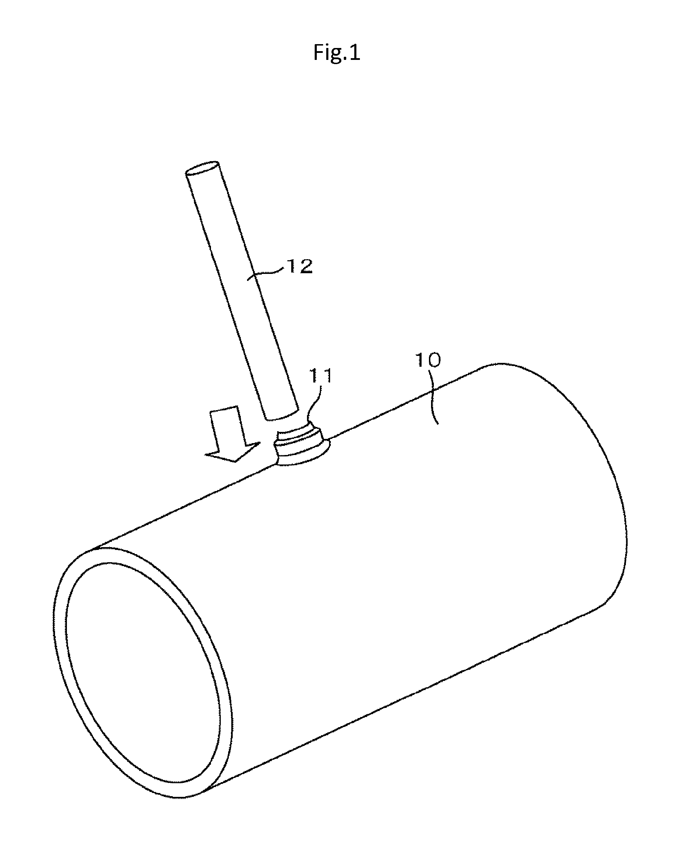

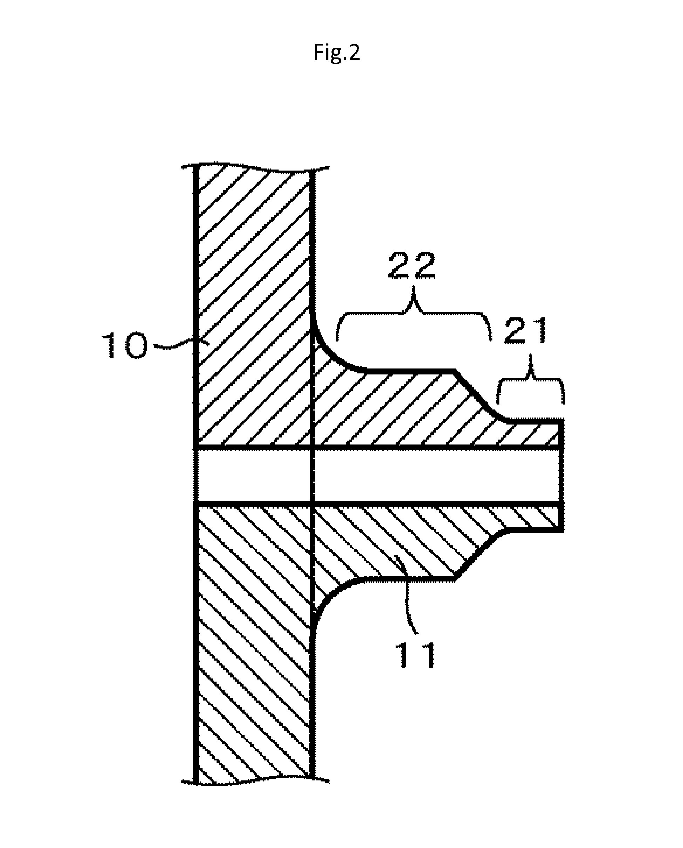

However, assuming a case in which a small diameter pipe having a diameter of 200 mm or less and a thickness of 15 mm or less may be joined to a pipe having a diameter greater than that of the small diameter pipe, a method is adopted for welding such that a small diameter pipe 12 is welded to a joint 11 that has previously been joined to a large diameter pipe 10 as illustrated in Fig. 1. In such a case, the joint is short and is formed such that a same diameter portion 21 having the same diameter as that of the small diameter pipe is shorter in length than a thick walled portion 22 as illustrated in a cross sectional view of Fig. 2. A distance between the welded portion between the joint and the small diameter pipe, and the large diameter pipe is therefore small. Thus, the large diameter pipe having large heart capacity absorbs heat, which leads to a problem that the heating area cannot be heated uniformly.

In other words, if the vicinity of the center of the heating area is heated to a predetermined target temperature, an end portion of the heating area on the large diameter pipe side has temperature largely lower than the target temperature. Therefore, a sufficient stress improvement may probably be not achieved. On the other hand, if the end portion of the heating area on the large diameter pipe side is heated to the predetermined target temperature, the vicinity of the center of the heating area has temperature largely exceeds the target temperature. Therefore, the material characteristics of the pipe may probably be affected. To heat the end portion on the large diameter pipe side to the predetermined target temperature, a larger heater is needed, which causes increased costs. If a rate of temperature rise is intended to be suppressed to achieve the uniformity of temperature, working hours are enormous. Specifically, it is necessary for a pipe to be subjected to adiabatic treatment in a wide range by the use of an adiabatic material or the like. This also causes increased costs.

### Prior Art Documents

### Patent Documents

Patent document 1: JP-S54-94415-A
Patent document 2: JP 4196755-B
Patent document 3: JP-2005-320626-A

### Summary of the Invention

### Problem to be Solved by the Invention

It is an object of the present invention to provide a thermal processing method for reducing the intention residual stress of a pipe caused by welding or processing.

### Means for Solving the Problem

The present invention is a thermal processing method comprising: welding a small diameter pipe to a bonded joint joined to a large diameter pipe, the small diameter pipe having a diameter of 200 mm or less and a thickness of 15 mm or less, the large diameter pipe having a diameter greater than that of the small diameter pipe; then heating the vicinity of the welded portion; and then cooling an inner surface of the pipes by use of coolant; a distance between a heating area and the large diameter pipe is equal to or greater than 70 mm.

### Effect of the Invention

The present invention can effectively change the intention residual stress caused by welding or processing the pipe, into compressive residual stress.

### Brief Description of Drawings

Fig. 1 is a schematic view of an example of a conventional technique for joining a large diameter pipe and a small diameter pipe with each other.
Fig. 2 is a cross-sectional view of an example of a joint used between the large diameter pipe and the small diameter pipe in the conventional technique.
Fig. 3 is a schematic view of an embodiment of the present invention.
Fig. 4 is a cross-sectional view of a joint used between a large diameter pipe and a small diameter pipe according to the embodiment.
Fig. 5 shows the relationship between a heating position and the maximum difference in temperature within a heating area.

### Mode for Carrying Out the Invention

The present invention will hereinafter be described in detail.

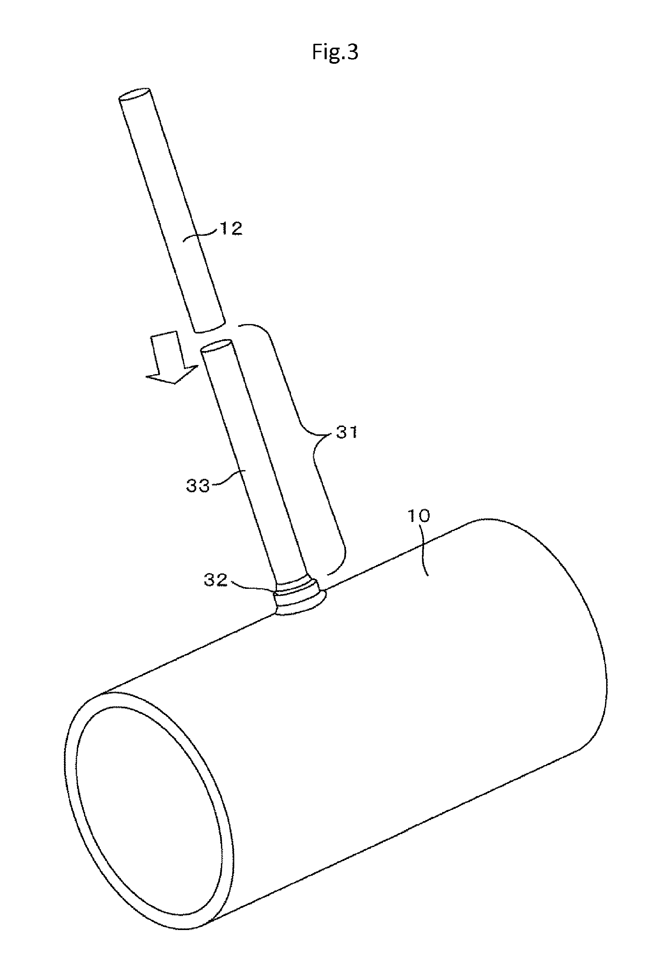

Fig. 3 is a schematic view of an embodiment of the present invention. In Fig. 3, a small diameter pipe 12 has a diameter of 200 mm or less and a thickness of 15 mm or less. The small diameter pipe 12 is connected to a pipe 10 via a joint 31 joined previously to the pipe 10. The pipe 10 has a diameter greater than that of the small diameter pipe 12. The joint 31 is composed of a thick walled base portion 32 and a small diameter portion 33. The base portion 32 is directly joined to the large diameter pipe 10. The small diameter portion 33 is designed to have the same diameter as that of the small diameter pipe 12 and is directly joined to the small diameter pipe 12.

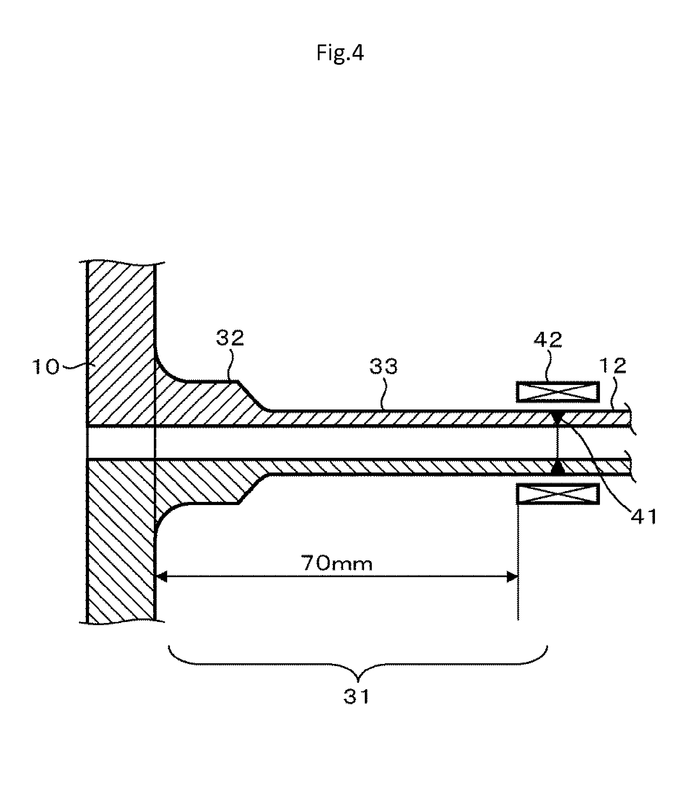

Fig. 4 is a schematic cross-sectional view illustrating a heating state of a welded portion according to the embodiment of the invention. In Fig. 4, a heater 42 is disposed at an outer surface of a welded portion 41 between the small diameter portion 33 of the joint 31 and the small diameter pipe 12 for heating the welded portion. A heating area reaches a predetermined target temperature and thereafter coolant is allowed to flow in the pipe to cool the inner surface thereof. In this manner, an improvement in the residual stress of the inner surface of the welded portion 41 is achieved by the temperature difference between the inner and outer surfaces of the pipe. In this case, it is desirable to uniformly heat the heating area as much as possible.

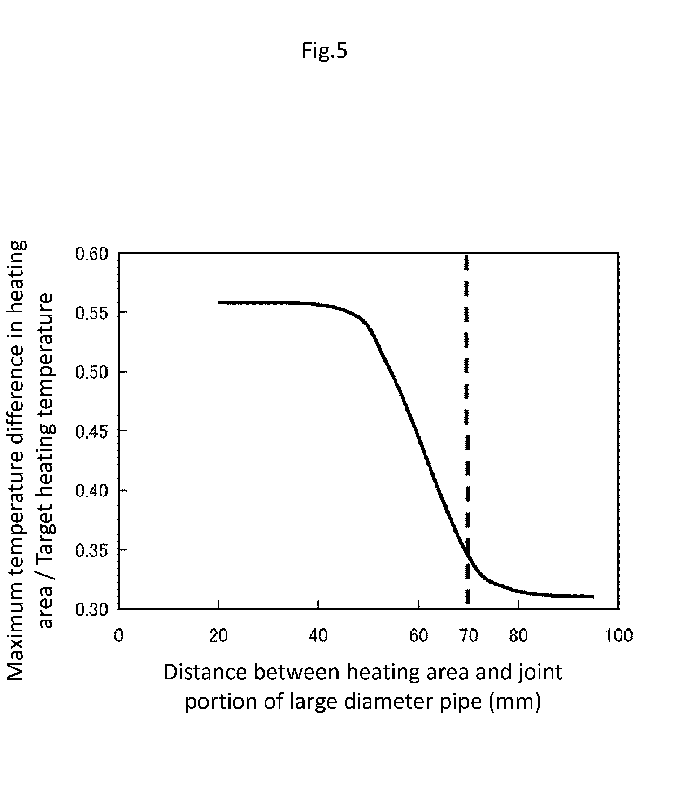

Fig. 5 shows the relationship between a distance between an end of the heating area and the large diameter pipe 10, and the ratio between the maximum temperature difference in the heating area and a heating target temperature. This relationship is obtained by use of the finite element method. The horizontal axis indicates the distance between the end of the heating area and the large diameter pipe 10. The vertical axis indicates the ratio between the maximum temperature difference in the heating area and a heating target temperature. The vertical axis shows that the smaller the value is, the more uniformly the heating area is heated. Fig. 5 shows that the ratio between the maximum temperature difference in the heating area and the heating target temperature sharply drops when the distance between the end of the heating area and the large diameter pipe 10 exceeds 50 mm, while the ratio becomes constant when the distance is equal to or greater than 70 mm.

Accordingly, it is appropriate that the distance between the end of the heating area and the large diameter pipe 10 be set to 70 mm or more. Specifically, the length of the heater 42 to heat the heating area uniformly is taken into consideration and the small diameter portion 33 of the joint 31 is designed to have such a length that the distance from an end of the heater 42 to the large diameter pipe 10 is equal to or more than 70 mm as shown in Fig. 4.

### Explanation of Reference Numerals

- 10: large diameter pipe
- 11: bonded joint of a conventional technique
- 12: small diameter pipe
- 21: same diameter portion
- 22: thick walled portion
- 31: bonded joint of the present invention
- 32: thick walled base portion
- 33: small diameter portion
- 41: welded portion
- 42: heater

## Claims

1. A thermal processing method comprising:
welding a small diameter pipe (12) to a bonded joint (31) joined to a large diameter pipe (10), the small diameter pipe (12) having a diameter of 200 mm or less and a thickness of 15 mm or less, the large diameter pipe (10) having a diameter greater than that of the small diameter pipe (12);
then heating the vicinity of the welded portion; and
then cooling an inner surface of the pipes by use of coolant;
wherein a distance between a heating area and the large diameter pipe (10) is equal to or greater than 70 mm.

2. The thermal processing method according to claim 1,
wherein the bonded joint (31) previously includes a same diameter portion (33) having the same diameter as that of the small diameter pipe (12) so that the distance between the heating area and the large diameter pipe (10) may be equal to or greater than 70 mm.
